(19) **Europäisches Patentamt**

**European Patent Office**

**Office européen des brevets**

(11) Numéro de publication : **0 486 366 B1**

(12) # FASCICULE DE BREVET EUROPEEN

(45) Date de publication du fascicule du brevet :
**22.03.95 Bulletin 95/12**

(51) Int. Cl.⁶ : **G01S 13/74,** G01S 13/75, G06K 7/00

(21) Numéro de dépôt : **91402990.5**

(22) Date de dépôt : **07.11.91**

(54) **Circuit d'augmentation du débit d'informations dans un système d'échange de données.**

(30) Priorité : **16.11.90 FR 9014291**

(43) Date de publication de la demande :
**20.05.92 Bulletin 92/21**

(45) Mention de la délivrance du brevet :
**22.03.95 Bulletin 95/12**

(84) Etats contractants désignés :
**AT BE CH DE ES GB GR IT LI LU NL SE**

(56) Documents cités :
**EP-A- 0 245 555**
**EP-A- 0 297 688**
**AU-B- 558 130**

(73) Titulaire : **THOMSON-CSF
SEMICONDUCTEURS SPECIFIQUES
51 Esplanade du Général de Gaulle
F-92800 Puteaux (FR)**

(72) Inventeur : **Camiade, Marc
THOMSON-CSF,
SCPI,
Cédex 67
F-92045 Paris la Défense (FR)**
Inventeur : **Quentin, Pierre
THOMSON-CSF,
SCPI,
Cédex 67
F-92045 Paris la Défense (FR)**
Inventeur : **Savary, Pierre
THOMSON-CSF,
SCPI,
Cédex 67
F-92045 Paris la Défense (FR)**
Inventeur : **Brandeau, Jean-Philippe
THOMSON-CSF,
SCPI,
Cédex 67
F-92045 Paris la Défense (FR)**

(74) Mandataire : **Taboureau, James et al
THOMSON-CSF,
SCPI,
B.P. 329,
50, rue Jean-Pierre Timbaud
F-92402 Courbevoie Cédex (FR)**

## Description

La présente invention concerne un système de transmission de données par modulation-démodulation d'une onde électromagnétique, pour communication bidirectionnelle entre une station fixe, dite balise ou lecteur, et une station mobile, dite badge ou répondeur. Plus précisément, l'invention concerne le modem (modulateur-démodulateur) du badge portable, pour lequel un perfectionnement apporté par l'invention permet de passer de l'état de veille, auquel correspondent une faible consommation mais aussi un faible débit de données, à un état actif, auquel correspondent une consommation plus élevée mais un fort débit de données, multiplié par un facteur de l'ordre de 100 ou plusieurs centaines.

Ce type d'échange de données trouve ses applications dans le contrôle de mobiles, tel qu'identification de wagons sur une voie, d'automobiles à un péage ou de piétons à une entrée d'immeuble.

La station mobile ou badge se présente comme une carte à puce, et elle doit être extrêmement économe en énergie, car elle est alimentée par de petites piles dites "boutons".

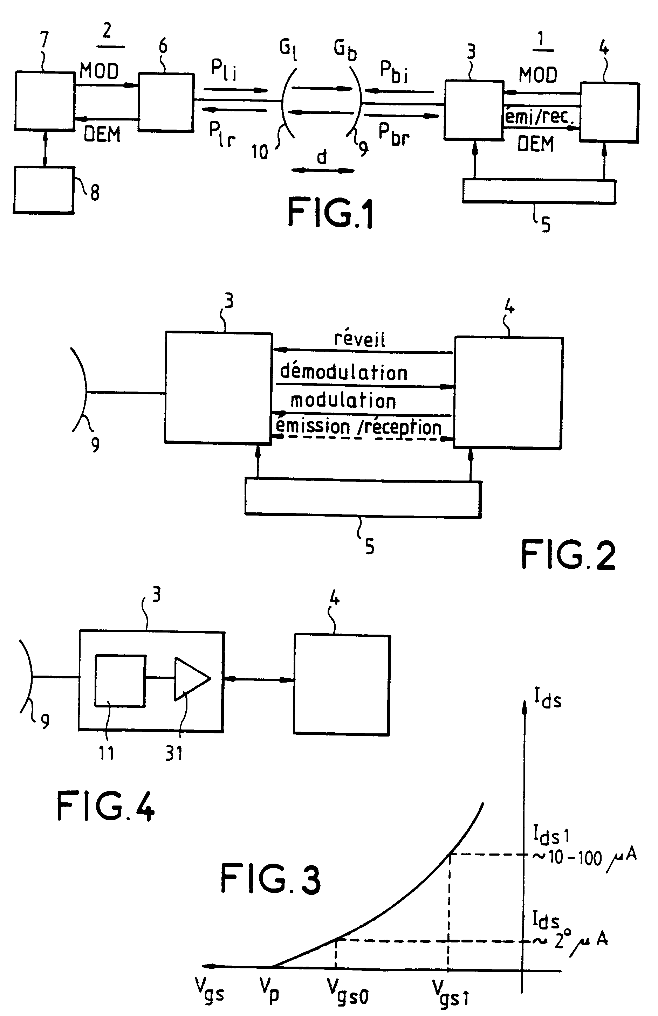

Le schéma d'ensemble d'un système d'échange de données par rayonnement électromagnétique ou hyperfréquences, selon l'art connu, est assez simple, et la figure 1 qui le représente permet d'en préciser les éléments, et les sigles utilisés.

Une station mobile ou badge 1 comprend une partie hyperfréquence 3, une partie traitement de l'information 4 et une alimentation 5. Les échanges entre ces deux parties concernent la modulation-démodulation et les commandes émission/réception.

La station fixe ou balise 2 comprend une source hyperfréquence, une partie hyperfréquence 6, une partie de traitement de l'information 7, et un calculateur 8 qui permet de gérer l'ensemble des échanges radioélectriques effectués avec les badges, par l'intermédiaire des antennes 9 pour chaque badge et 10 pour la balise ou lecteur.
On utilisera :
- d = distance entre les antennes 9 et 10
- $G_l$ = gain de l'antenne 10 du lecteur 2
- $G_b$ = gain de l'antenne 9 du badge 1
- $P_{li}$ = puissance émise à l'antenne du lecteur 2
- $P_{lr}$ = puissance reçue par l'antenne du lecteur
- $P_{bi}$ = puissance émise à l'antenne du badge 1
- $P_{br}$ = puissance reçue par l'antenne du badge
Les modulations utilisées dans ces systèmes sont généralement de type OOK ( en modulation d'amplitude On-Off-Keying), de type PSK (en modulation de phase O/$\Pi$ Phase-Shift-Keying), ou FSK (Frequency Shift Keying).

Le fonctionnement du modem n'est pas le même selon que la balise interroge le badge oui que le badge répond à la balise.

Dans le sens de l'interrogation du badge 1 par le lecteur 2, celui-ci génère ($P_{li}$) un signal hyperfréquence modulé. Le badge reçoit ce signal ($P_{br}$) et le démodule : c'est une étape qui permet d'activer le badge qui était à l'état de veille.

Dans le sens de la réponse du badge 1 au lecteur 2, le lecteur génère alors un signal hyperfréquence non modulé. Le badge reçoit ce signal, le module - c'est à dire le charge des informations au sujet desquelles il a été interrogé - et réémet un signal comportant, suivant le cas, soit des pertes, soit du gain.

En effet, le badge peut être :
- passif, c'est à dire que la puissance qu'il émet est toujours inférieure à la puissance qu'il reçoit ($P_{bi} < P_{br}$), et l'énergie lui est fournie par le lecteur,
- ou actif, c'est à dire qu'il comprend un amplificateur hyperfréquence ($P_{bi} > P_{br}$) , ce qui suppose donc une source d'alimentation telle que des piles . Il y a donc des problèmes de consommation d'énergie tout au moins du côté du badge, qui équivalent à des problèmes d'obtention de sensibilité du badge à l'état de veille, donc sous très faible consommation, et de sensibilité du lecteur compte tenu du faible niveau d'émission du badge, et des parasites apportés par d'autres systèmes fonctionnant à une fréquence proche.

Mais en outre, il y a des problèmes de débits d'informations numériques. L'économie d'énergie lorsque le badge est à l'état de veille - ce qui est son état le plus courant - impose que la fonction de démodulation soit réalisée sous très haute impédance : les constantes de temps, liées aux impédances et aux capacités d'entrées des circuits, limitent les débits à quelques dizaines de kilobits/seconde, par exemple. Ces débits ne sont pas suffisants pour assurer un trafic d'informations normal entre une station fixe et plusieurs stations mobiles ou badges : il faut atteindre plusieurs mégabits/seconde, dès que le badge est "réveillé", et qu'il entre en communication avec le lecteur.

Un fort débit d'informations impose à son tour que la fonction modulation du modem soit sous faible impédance ce qui correspond d'ailleurs à une plus forte consommation d'énergie pendant la durée de la réponse du badge vers le lecteur.

Le fonctionnement à deux "vitesses" d'un système de télécommunications hertziennes est un phénomène courant et bien connu : une station périphérique fonctionne à faible énergie, et faible consommation, dans l'attente de l'ordre de réveil envoyé par une station centrale, qui déclenche un échange de données à fort débit, donc avec une plus grande consommation d'énergie. Pour remplir ces conditions, différents dispositifs sont possibles. Par exemple, dans le document EP-A-0 245 555, la station mobile, périphérique, est équipée d'un système à deux voies commutées par un commutateur d'antenne : la voie de réception transmet à un microprocesseur les signaux codés de réveil, et, dès lors , le microprocesseur commute l'antenne sur une voie d'émission qui comporte, entre autres deux tripleurs de fréquence, ce qui assure une réponse à haut débit.

Selon l'invention, le badge, à l'état de veille, transmet à son circuit de traitement 4 une série d'informations à faibles débits, qui sont identifiées par ledit circuit comme une interrogation provenant du lecteur 2. Le circuit de traitement 4 du badge "réveille" alors le modem 3 en émettant des signaux qui agissent sur des moyens qui modifient la ou les impédances du modem, et lui permettent de répondre avec un débit élevé d'informations à l'interrogation du lecteur.

De façon plus précise, l'invention concerne un badge portable, constituant une station mobile dans un système d'échanges de données, par ondes électromagnétiques microondes, avec une station fixe, ce badge comportant un circuit de réveil et étant défini par la revendication 1.

L'invention sera mieux comprise par l'exposé plus détaillé qui en est fait maintenant, appuyé sur deux variantes de réalisation, et sur les figures jointes en annexe qui représentent :
- figure 1 : schéma général d'échange de données entre une station fixe et une station mobile, par ondes éléctromagnétiques, selon l'art connu, exposé précédemment,
- figure 2 : schéma synoptique du perfectionnement apporté par l'invention à la station mobile ou badge dans un système d'échange de données.
- figure 3 : courbe I(V) d'un transistor à effet de champ, correspondant à une première variante des moyens mis en oeuvre au titre de l'invention,
- figure 4 : schéma synoptique correspondant à une deuxième variante des moyens mis en oeuvre au titre de l'invention,
- figure 5 : schéma électrique du modem à haut débit d'un badge, selon la première variante de l'invention,
- figure 6 : schéma électrique du modem à haut débit d'un badge, selon la deuxième variante de l'invention.

La figure 2 reprend la partie du badge 1 de la figure 1, mais montre un nouveau lien entre le modem 3 et le circuit de traitement de l'information 4.

Dans les systèmes hyperfréquences comprenant une station fixe ou lecteur et une station mobile ou badge, les débits de transmission sont généralement limités dans le sens du lecteur vers le badge. En effet, bien qu'il n'y ait pas de problème particulier pour qu'un lecteur émette à fort débit, car sa consommation importe peu, par contre si la fonction de démodulation du badge est unique, on n'a qu'un seul état énergétique, celle-ci doit être réalisée à très haute impédance, car elle correspond à l'état de veille sous très faible consommation d'énergie - à cause des piles "boutons" qui alimentent le badge. Les constantes de temps, liées aux impédances élevées du modem 3 et aux capacités d'entrées du circuit de traitement 4, limitent le débit de démodulation à quelques dizaines de kilobits/seconde.

Ce faible débit est suffisant pour activer le circuit de traitement de l'information 4, mais insuffisant pour assurer des échanges de données entre un lecteur et une pluralité de badges : plusieurs mégabits/seconde sont nécessaires.

Selon l'invention, lorsque le circuit de traitement 4 détecte une interrogation provenant du lecteur 2, il envoie au modem 3 du badge un signal qui le "réveille", et abaisse ses impédances caractéristiques, autorisant ainsi un fort débit d'informations.

Les différentes liaisons entre le modem et le circuit de traitement du badge sont :
- démodulation : transmet au circuit de traitement l'interrogation démodulée provenant du lecteur, ce qui active le circuit de traitement,
- modulation : permet de moduler la porteuse émise par le lecteur ; cette modulation constitue la réponse du badge émise vers le lecteur,
- réveil : c'est l'objet de l'invention. Cette liaison permet de modifier l'état électrique des circuits (abaissement d'impédance) pour autoriser de hauts débits de transmission. Le changement d'état logique de ce signal se fait dès que le badge est réveillé;
- émission-réception : éventuellement. Cette liaison existe dans le cas d'un badge nécessitant un changement d'état électrique du modem entre la réception et l'émission. Par exemple un badge actif en émission pour lequel il est nécessaire de modifier le ou les points de polarisations du ou des transistors actifs comme détecteurs ou modulateurs.

Les états électriques du badge sont donc :

A - Veille
- c'est l'état quasi-permanent du badge, lorsqu'il est hors de portée, dans l'espace ou dans le temps, d'une station fixe,
- la consommation est très faible, quelques microampères, limitée au démodulateur 3 à très haute impédance, et à l'alimentation de la chaîne de réveil du circuit de traitement 4,
- le débit de l'information de réveil est donc faible, à quelques dizaines de kilobits/seconde.

B - Réception
- c'est la phase d'interrogation du badge par le lecteur, après l'avoir réveillé,
- les circuits de traitement sont tous alimentés,
- la consommation peut être relativement élevée, quelques millampères, car le mode réception ne représente qu'un temps très court devant la durée de vie du badge,

- les débits d'informations peuvent être élevés, quelques megabits/seconde en raison du degré de liberté sur la consommation, pendant une courte période.

C - Emission

- c'est la phase de réponse du badge au lecteur,
- les circuits de traitement sont tous alimentés,
- la consommation, pendant le court intervalle de temps que dure la réponse, permet d'utiliser une fonction active en émission présentant du gain en hyperfréquences.
- les débits d'informations peuvent être élevés, pendant un temps court.

Le procédé de réveil du badge est basé sur un changement du point de polarisation du transistor qui fonctionne en détecteur dans le modem 3.

Pour augmenter le débit du démodulateur du badge, on travaille à courant de polarisation plus élevé, ce qui réduit les impédances et les constantes de temps.

La figure 3 donne l'exemple d'un transistor à effet de champ, polarisé sur sa grille à une tension $V_{gs0}$ proche de la tension de pincement $V_p$ : le transistor est à l'état de veille, et à cette tension $V_{gs0}$ correspond un courant drain $I_{ds}$ faible, 2 µA par exemple. Pour réveiller le badge, on commute la tension de polarisation de grille sur une valeur $V_{gs1}$ plus élevée, à laquelle correspond un courant drain $I_{ds}$ plus élevé, par exemple compris entre 10 et 100µA, qui diminue les impédances et constantes de temps. Si $I_{ds}$ passe 2µA à 20µA le débit d'informations est multiplié par 10.

Ce phénomène n'est limité que par la non-linéarité du transistor à effet de champ en fonction de $V_{gs}$ : on sait que si $V_{gs}$ est trop élevé, la caractéristique $I_{ds}$ ($V_{gs}$) du transistor, quasi linéaire, ne permet plus d'avoir la fonction détecteur.

Dans le cas où le débit d'informations demandé est tel qu'on ne peut pas l'atteindre par simple augmentation du courant, on peut utiliser un (ou plusieurs) amplificateur 31, en série avec le transistor détecteur 11, dans le modem 3, comme représenté en figure 4 : c'est l'amplificateur qui est "réveillé", pour transmettre à haut débit.

Le - ou les - amplificateur 31 travaille à la fréquence de démodulation, et sa tension de polarisation est changée, tandis que le transistor 11 continue à être dans une zone de polarisation optimale pour la fonction détection. Le fondement de ce montage consiste à abaisser l'impédance de charge du détecteur, donc à augmenter le débit d'informations, sans changer son point de polarisation, et à compenser la chute de niveau associée à la diminution de l'impédance de sortie par le changement de polarisation et donc l'augmentation du gain de l'amplificateur 31 qui suit le détecteur 11.

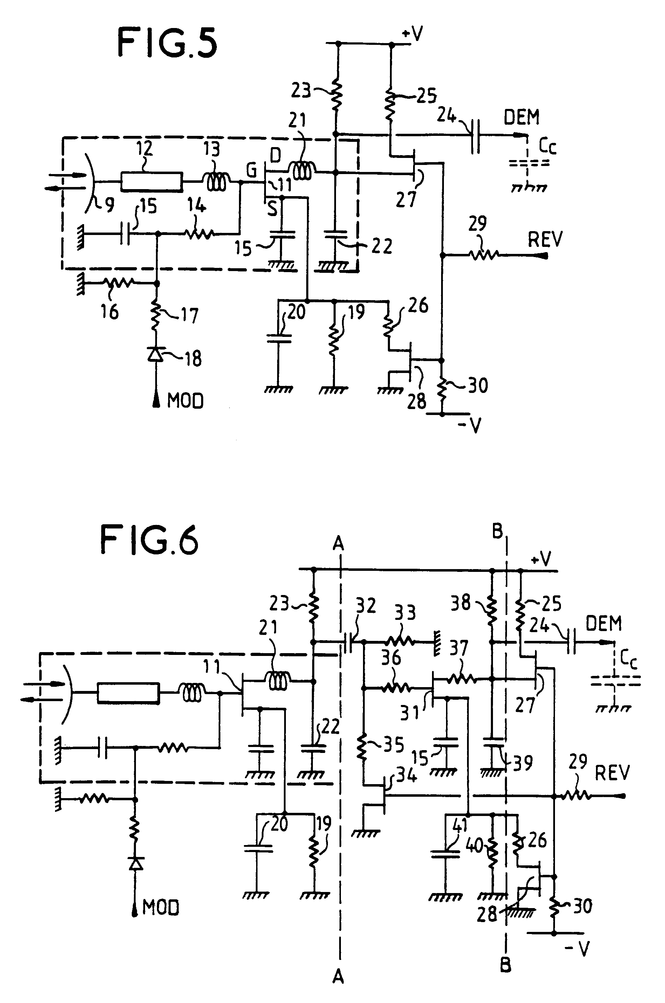

La figure 5 donne le schéma électrique détaillé d'un modem à haut débit, réalisé en circuit intégré selon l'invention, dans lequel est modifié le point de polarisation du transistor utilisé en détecteur. Le circuit représenté est actif en réception et passif en émission, mais d'autres types de circuits peuvent être adaptés selon l'invention.

Ce modem comprend une partie hyperfréquence connue, dans laquelle 11 est un transistor à effet de champ qui fonctionne en détecteur, et doté :

- sur sa grille d'un circuit d'adaptation d'impédance 13+14+15 de l'antenne 9. La microbande 12 adapte l'antenne à l'entrée du circuit intégré. Le pont diviseur 16 + 17 permet d'ajuster la tension de polarisation de grille, et la diode 18 permet de moduler la grille au moyen d'un signal alternatif.
- sur sa source d'une capacité de découplage 15 et d'un circuit d'autopolarisation en mode veille 19 + 20
- sur son drain d'un circuit d'adaptation d'impédance 21+22, réuni à l'alimentation +V à travers une résistance 23, et à la sortie démodulée DEM à travers une capacité de couplage 24.

Les capacités 15 et 22 sont des capacités de découplage aux hyperfréquences. Les résistances 23 et 19 sont de valeurs élevées, de l'ordre de 100 kΩ et 500 kΩ respectivement. Ce sont elles qui, à l'état de veille, polarisent le drain et la source, et par conséquent déterminent $V_{gs}$ et $I_{ds}$.

Pour réveiller le badge, ces deux résistances de polarisation 23 et 19 sont quasiment court-circuitées par les deux résistances 25 et 26, respectivement, qui sont de l'ordre de 10 kΩ, c'est à dire nettement moins élevées en valeur que 100 et 500 kΩ.

La commutation entre les résistances 23 et 25, d'une part, et 19 et 26, d'autre part, est effectuée au moyen des transistors 27 et 28 respectivement, lorsqu'ils sont à l'état passant. Ces transistors de commutation 27 et 28 sont commandés par le circuit de traitement de l'information 4, par un signal appliqué sur la borne de réveil REV, et limité par la résistance 29.

La résistance 30 met à -V les grilles des transistors de commutation 27 et 28, si ceux-ci ne sont pas commandés ou si la fonction réveil est à haute impédance : en effet, l'état haute impédance est souvent celui des portes logiques d'un circuit de traitement en mode "veille". Les transistors 27 et 28 sont alors bloqués.

La figure 6 donne le schéma électrique détaillé d'un modem à haut débit, réalisé en circuit intégré, selon l'invention, mais comportant un amplificateur derrière le transistor détecteur 11. Par comparaison avec la figure précédente, l'homme du métier reconnaît sans difficulté les parties communes à ces deux circuits, c'est à dire :

- à gauche de la figure et de la ligne AA, la partie hyperfréquence, entourée d'un pointillé,
- à droite de la figure et de la ligne BB, le système des deux transistors de commutation 27 et 28, ainsi que leurs résistances commutées 25 et 26 et leurs résistances d'alimentation 29 et 30.

Les indices de repère n'ont pas tous été rapportés pour ne pas surcharger la figure : si nécessaire, ils se déduisent de la figure 5.

L'amplificateur à la fréquence de démodulation est essentiellement constitué par au moins un transistor 31, branché au moyen d'une capacité de découplage 32 sur la charge du transistor hyperfréquence 11. Aux fréquences de démodulation, relativement basses, la charge BF du transistor 11 est constituée par la résistance 23 (environ 100 k$\Omega$), la capacité 32 et la résistance 33 (environ 500 k$\Omega$ - 1 M$\Omega$).

Le transistor 34, lorsqu'il est commandé par le signal de réveil REV en même temps que les transistors 27 et 28, commute la charge BF du transistor détecteur 11 : sa résistance de charge 33 (0,5 - 1 M$\Omega$) à l'état de veille est shuntée par la résistance 35 de faible valeur (10 k$\Omega$) à l'état réveillé.

Les résistances 36 et 37 sont des résistances de stabilisation du transistor 31 à l'état réveillé : sa charge de drain est constituée par la résistance 38 de forte valeur (environ 100 k$\Omega$) et la capacité de découplage aux hyperfréquences 39. Sa source, découplée par une capacité 15, est autopolarisée par une résistance 40 et une capacité 41, de la même façon que la source du transistor détecteur 11 : de même que la résistance 19, la résistance 40 a une valeur élevée, environ 500 k$\Omega$.

Tandis que dans le cas de figure précédent, les transistors de commutation 27 et 28 commutaient les résistances 19 et 23 de source et drain du transistor détecteur 11, dans le cas présent :

- les transistors de commutation 27 et 28 commutent les résistances 40 et 38 de source et drain du transistor amplificateur 31, ce qui modifie sa polarisation,
- et le transistor 34 commute l'impédance de sortie du transistor détecteur 11, en shuntant la résistance 33 de forte valeur par la résistance 35 de faible valeur.

Sur la figure 6, il n'y a qu'un seul étage d'amplification, compris entre les lignes AA et BB, entre l'étage détecteur et l'étage de réveil par changement des points de polarisation. Si le débit d'informations demandé au badge doit être plus élevé que celui fourni avec un seul étage d'amplification, il n'y a aucune difficulté pour l'homme de l'art à monter en cascade plusieurs étages d'amplification identiques à celui qui est représenté : il faut seulement prévoir que chaque amplificateur comporte son propre étage de réveil, soit les transistors 27 et 28, et les circuits associés.

Le transistor 34, et son circuit associé 32+35, qui commute l'impédance de sortie du transistor détecteur 11, reste unique s'il y a plusieurs étages d'amplification. La sortie démodulée DEM est prise sur le dernier amplificateur.

Considérons que le circuit de traitement du signal 4 (Fig. 1) est équivalent à une capacité de charge $C_c$, représentée en pointillés sur les figures 5 et 6 et négligeons la conductance de charge. Les constantes de temps qui limitent le débit d'information en réception sont, au premier ordre :

- pour le circuit de la figure 5 (changement de polarisation du détecteur ).
  à l'état de veille : $R_{23}$ ($C_c$ + $C_{22}$)
  à l'état réveillé : $R_{25}$ ($C_c$ + $C_{22}$)
- pour le circuit de la figure 6 (changement de polarisation de l'amplificateur),
  à l'état de veille : $R_{23} \cdot C_{22}$
  ou $R_{38}$ ($C_c$ + $C_{39}$)
  à l'état réveillé : $R_{35} \cdot C_{22}$
  ou $R_{25}$ ($C_c$ + $C_{39}$)

Dans chacun des deux états, c'est l'une des deux constantes de temps qui limite le débit, avant l'autre constante.

Pour avoir de forts débits d'informations il faut donc :

- dans les deux cas, que les capacités de découplage $C_{22}$ et $C_{39}$ des transistors 11 et 31 soient les plus faibles possible,
- dans le cas de la figure 5 (sans amplificateur) que

$$R_{25} << R_{23}$$

- dans le cas de la figure 6 (avec amplificateur), que

$$R_{35} << R_{23}$$

et

$$R_{25} << R_{38}$$

Les deux exemples qui ont été exposés utilisent un modem de type semi-actif. L'invention est applicable à d'autres types de modem, dont il suffit de changer la polarisation du transistor détecteur. De même, la réalisation en circuit intégré ne limite pas l'application de l'invention, qui peut être réalisée en circuit hybride, à l'aide de lignes microbandes qui remplacent les selfs et les capacités.

**Revendications**

1. Badge portable, constituant une station mobile (1) d'un système d'échange de données, par ondes électromagnétiques microondes, avec une station fixe (2), émettant un signal de réveil du badge à faible débit d'information, ce badge comportant :

   - un modulateur et un démodulateur (3),

- un circuit de traitement de l'information (4),
- un circuit de réveil, commandé par le signal de réveil émis par la station fixe (2), et transmis par le démodulateur et le circuit de traitement de l'information, et dont la fonction est d'augmenter le débit d'informations échangées par le système, en dehors de l'état de veille, ce badge étant caractérisé en ce que :
- le modulateur et le démodulateur sont constitués par au moins un premier transistor (11) à effet de champ agencé pour agir en détecteur à la réception de signaux émis par la station fixe (2), et en modulateur à l'émission de signaux vers la station fixe (2), et en ce que pour obtenir l'augmentation du débit d'informations,
- le circuit de réveil comprend des moyens de diminution de l'impédance de sortie du premier transistor (11) qui sont constitués par au moins un second transistor de commutation (27,28) qui, commandé par le signal de réveil, est agencé pour commuter au moins l'une des résistances de charges (23,19) de valeur élevée du drain ou de la source du premier transistor (11) par une résistance (25,26) de valeur moins élevée, et pour entraîner une augmentation de la tension de polarisation grille-source $V_{gs1}$, qui entraîne une augmentation du courant drain-source $I_{ds1}$ et une diminution de l'impédance de sortie du premier transistor (11).

2. Badge selon la revendication 1, caractérisé en ce que, le démodulateur (3) du badge (1) comportant au moins le premier transistor (11) détecteur à effet de champ est suivi par au moins un troisième transistor amplificateur (31), les moyens de diminution des impédances de sortie sont constitués, d'une part, par au moins un quatrième transistor (34) qui commute la résistance (33) de valeur élevée du drain du premier transistor détecteur (11) par une résistance (35) de valeur moins élevée, et, d'autre part, par au moins le deuxième transistor de commutation (27,28) qui commute au moins l'une des résistances de charge (38,40), de valeur élevée, du drain ou de la source du troisième transistor amplificateur (31) par une résistance (25,26) de valeur moins élevée.

**Patentansprüche**

1. Tragbare Marke, die eine bewegliche Station (1) eines Systems zum Datenaustausch mittels elektromagnetischer Mikrowellen mit einer Feststation (2) bildet, wobei die Feststation ein Wecksignal für die Marke mit geringem Informationsdurchsatz aussendet und die Marke aufweist:
- einen Modulator und einen Demodulator (3),
- eine Informationsverarbeitungsschaltung (4),
- eine Weckschaltung, die vom von der Feststation (2) ausgesendeten und durch den Demodulator und die Infomationsverarbeitungsschaltung übertragenen Wecksignal gesteuert wird und deren Aufgabe es ist, den Durchsatz der in diesem System außerhalb des Wartezustands ausgetauschten Daten zu erhöhen, dadurch gekennzeichnet, daß
- der Modulator und der Demodulator aus mindestens einem ersten Feldeffekttransistor (11) bestehen, der als Detektor für den Empfang von von der Feststation (2) ausgesendeten Signalen und als Modulator zum Aussenden von Signalen zur Feststation (2) verwendbar ist, und daß zur Erhöhung des Datendurchsatzes
- die Weckschaltung Mittel zur Verringerung der Ausgangsimpedanz des ersten Transistors (11) besitzt, die von mindestens einem zweiten Schalttransistor (27, 28) gebildet werden, der so geschaltet ist, daß er bei Steuerung durch das Wecksignal mindestens einen der hochohmigen Lastwiderstände (23, 19) des Drain oder der Source des ersten Transistors (11) auf einen Widerstand (25, 26) geringeren Werts umschaltet und eine Erhöhung der Gate-Source-Vorspannung $V_{gs1}$ bewirkt, die zu einer Erhöhung des Drain-Source-Stroms $I_{ds1}$ und einer Verringerung der Ausgangsimpedanz des ersten Transistors (11) führt.

2. Marke nach Anspruch 1, dadurch gekennzeichnet, daß auf den Demodulator (3) der Marke (1) mit mindestens dem ersten Detektor-Feldeffekttransistor (11) mindestens ein dritter Verstärkungstransistor (31) folgt, daß die Mittel zur Verringerung der Ausgangsimpedanzen einerseits von mindestens einem vierten Transistor (34), der den hochohmigen Drainwiderstand (33) des ersten Detektor-Transistors (11) auf einen Widerstand (35) geringeren Werts umschaltet, und andererseits aus mindestens dem zweiten Schalttransistor (27, 28) gebildet werden, der mindestens einen der hochohmigen Lastwiderstände (38, 40) des Drain oder der Source des dritten Verstärkertransistors (31) auf einen Widerstand (25, 26) geringeren Werts umschaltet.

**Claims**

1. Portable badge, constituting a mobile station (1) of a system for data exchange by microwave electromagnetic waves with a fixed station (2) sending a wake-up signal for the badge at a low information rate, this badge including:
   - a modulator and a demodulator (3),
   - an information processing circuit (4),
   - a wake-up circuit, controlled by the wake-up signal sent out by the fixed station (2) and transmitted by the demodulator and the information processing circuit, and the function of which is to increase the rate of information exchanged by the system, outside of the standby state,
   
   this badge being characterized in that:
   - the modulator and the demodulator consist of at least one first field-effect transistor (11), configured to act as a detector on receiving signals sent out by the fixed station (2), and as a modulator on sending signals towards the fixed station (2), and in that in order to obtain the increase in the information rate,
   - the wake-up circuit comprises means for reducing the output impedance of the first transistor (11) which consist of at least one second switching transistor (27, 28), switch, controlled by the wake-up signal, is configured to substitute at least one of the high-value load resistors (23, 19) of the drain or of the source of the first transistor (11) by a resistor (25, 26) of lower value, and in order to cause an increase in the gate-source bias voltage $V_{gs1}$, which entails an increase in the drain-source current $I_{ds1}$ and a reduction in the output impedance of the first transistor (11).

2. Badge according to Claim 1, characterized in that the demodulator (3) of the badge (1) including at least the first field-effect detector transistor (11) is followed by at least one third amplifier transistor (31), the means of reducing the output impedances consist, on the one hand, of at least one fourth transistor (34) which substitutes the high-value resistor (33) of the drain of the first detector transistor (11) by a resistor (35) of lower value, and, on the other hand, by at least the second switching transistor (27, 28) which substitutes at least one of the high-value load resistors (38, 40) of the drain or of the source of the third amplifier transistor (31) by a resistor (25, 26) of lower value.

FIG.1

FIG.2

FIG.4

FIG.3

# FIG.5

# FIG.6